# EUROPÄISCHE PATENTSCHRIFT

(11) **EP 2 904 261 B1**
(45) Veröffentlichungstag und Bekanntmachung des Hinweises auf die Patenterteilung: **11.04.2018**
(21) Anmeldenummer: 13765719.3
(22) Anmeldetag: 19.09.2013
(51) Int. Cl.: F03D 1/00

(54) **VERFAHREN ZUR MONTAGE EINES ROTORBLATTES UND MONTAGEANORDNUNG**
METHOD FOR MOUNTING A ROTOR BLADE AND ASSEMBLY ARRANGEMENT
PROCÉDÉ POUR LE MONTAGE D'UNE PALE DE ROTOR ET DISPOSITIF DE MONTAGE

(30) Priorität: 02.10.2012 DE 102012109403
(43) Veröffentlichungstag der Anmeldung: 12.08.2015
(73) Patentinhaber: Senvion GmbH, 22297 Hamburg (DE)
(72) Erfinder: BENDEL, Urs, 24787 Fockbek (DE)
(74) Vertreter: Groth, Wieland
(86) Internationale Anmeldenummer: PCT/EP2013/069474
(87) Internationale Veröffentlichungsnummer: WO 2014/053329

(56) Entgegenhaltungen:
- EP-A1- 2 345 811
- WO-A1-03/100249
- DE-A1-102007 058 054

## Beschreibung

Die Erfindung betrifft ein Verfahren zur Montage eines Rotorblattes sowie ein Rotorblatt für eine Windenergieanlage und eine Montageanordnung für das Rotorblatt zur Durchführung des Verfahrens sowie eine Expansionsvorrichtung.

Verfahren zur Montage von Rotorblättern, dafür geeignete Rotorblätter sowie Montageanordnungen für Rotorblätter sind im Stand der Technik bekannt.

Aus der DE 10 2006 008 428 A1 ist ein Verfahren zur Montage und Demontage eines Rotorblattes bekannt. Dort wird eine Manschette um die Rotorblattwurzel gelegt und festgezogen. Die Manschette ist mit Einhakeinrichtungen für Hebeseile versehen und ermöglicht eine gleichmäßige Verteilung der auf die Rotorblattschale wirkenden Kraft. Dadurch wird einer Beschädigung der Rotorblatthülle während der Montage entgegengewirkt.

Aus der DE 10 2009 024 324 A1 ist ein Verfahren zur Montage eines Rotorblattes für eine Windenergieanlage bekannt, bei dem Stege mit einer Kunststoffhalbschale verklebt werden, wobei die Stege zum Aushärten des Klebstoffs mittels einer Steghaltevorrichtung in Position gehalten werden.

Des Weiteren ist in der DE 10 2006 008 428 A1 ein Verfahren zur Montage und zur Demontage eines Rotorblattes offenbart, bei dem eine Manschette unmittelbar neben einem Vorsprung an der Rotorblattwurzel angeordnet wird und Hebemittel an der Manschette befestigt werden.

Aus der DE 10 2007 058 054 A1 ist ein Verfahren zur Regelung der elektrischen Last einer Windenergieanlage bekannt, wobei ein Rotorblatt der Windenergieanlage mit einem Lastsensor aufweist, der in Form eines Dehnungsmessstreifens von der Rotorblattwurzel bis zur Rotorblattspitze sich erstreckt.

Darüber hinaus sind Rotorblattklemmen bekannt, die in dem der Rotorblattwurzel abgewandten Bereich in Nähe des Tips des Rotorblattes außen um das Rotorblatt festgeklemmt werden können, um an ihnen weitere Halteseile zu befestigen. Das Rotorblatt kann mit Hilfe der Rotorblattklemmen horizontal am Boden liegend, vertikal vom Erdboden angehoben werden und unter Beibehaltung seiner horizontalen Lage auf Höhe des Blattanschlusses am Maschinenhaus verbracht werden.

Rotorblätter sind aus mehrschichtigen Laminaten aufgebaut, die eine innere Struktur in Form von in Längsrichtung an zwei miteinander verklebten Rotorblatthalbschalen verlaufenden, sich gegenüberliegenden Gurten und zwischen ihnen angeordneten Stegen aufweisen. Die Oberflächen der Laminate sind gegen Druck und Krafteinwirkungen empfindlich. Darüber hinaus können durch die Rotorblattklemmen und durch die durch um die Außenschale des Rotorblattes gelegte Halteseile entstehenden punktuellen Kräfte nicht nur Beschädigungen der Rotorblattaußenschale, sondern auch der inneren Struktur der Rotorblätter hervorgerufen werden.

Es ist daher Aufgabe der vorliegenden Erfindung, ein Verfahren sowie eine Montageanordnung zur Verfügung zu stellen, die eine schonende Befestigung des Rotorblattes am Maschinenhaus ermöglichen sowie ein dafür geeignetes Rotorblatt zur Verfügung zu stellen und eine Expansionsvorrichtung.

In ihrem ersten Aspekt wird die Erfindung durch ein Verfahren mit den Merkmalen des Anspruchs 1 gelöst.

Das erfindungsgemäße Verfahren macht von der Idee Gebrauch, außen um die Rotorblattschale mindestens eine Rotorblattklemme anzubringen, an der Halteseile befestigt werden können, mit deren Hilfe ein Anheben des Rotorblattes ermöglicht wird. Durch die mindestens eine Rotorblattklemme wird aber nachteiligerweise mindestens eine Klemmkraft von außen auf die Rotorblattschale, in einen Innenraum der Rotorblattschale weisend, ausgeübt. Die mindestens eine Klemmkraft kann zu Beschädigungen einer inneren Struktur des Rotorblattes und/oder der Rotorblattschale führen.

Erfindungsgemäß wird zeitlich vorher, nachher oder gleichzeitig mit dem Anbringen und Festklemmen der mindestens einen Rotorblattklemme in den Innenraum des Rotorblattes mindestens eine Expansionsvorrichtung eingebracht. Die mindestens eine Expansionsvorrichtung wird im Innenraum jeweils bis in das eine ihr zugeordnete Segment des Rotorblattes verbracht, um das die zugeordnete Rotorblattklemme außen angebracht wird. Im Innenraum des mindestens einen Segments, um das die mindestens eine Rotorblattklemme angebracht wird, wird die mindestens eine zugeordnete Expansionsvorrichtung expandiert. Das kann vorzugsweise gleichzeitig mit dem Festklemmen der mindestens einen Rotorblattklemme geschehen. Die mindestens eine Expansionsvorrichtung übt von innen mindestens eine nach außen wirkende Gegenkraft auf die Rotorblattschale aus, die die mindestens eine Klemmkraft wenigstens teilweise kompensiert.

Vorzugsweise wird die mindestens eine Gegenkraft in gleichem Maße wie die jeweils zugeordnete Klemmkraft gesteigert bzw. verringert, so dass während des Festklemmens der mindestens einen Blattklemme und des Expandierens der mindestens einen Expansionsvorrichtung ständig eine möglichst geringe Gesamtkraft ausgeübt wird. Klemmkraft und Expansionskraft können auch so gesteigert werden, dass die Gesamtkraft vorgegebene Höchstwerte nicht überschreitet.

Günstigerweise wird damit die auf die insbesondere innere Struktur des Rotorblattes, insbesondere auf die Gurte und Stege wirkende Gesamtkraft reduziert und einer Beschädigung der inneren Struktur des Rotorblattes sowie der Außenschale des Rotorblattes entgegengewirkt.

Vorzugsweise wird zur Ermittlung der wirkenden Gesamtkraft die Belastung der Rotorblattschale und/oder der inneren Struktur des Rotorblattes, insbesondere der Klebungsstellen der Stege, insbesondere der Hauptstege an den Gurten sowie der Stege selbst gemessen.

Vorzugsweise wird eine Verformung günstigerweise der inneren Struktur in dem mindestens einen Segment gemessen, um das die mindestens eine Rotorblattklemme angebracht ist. Die Messung der Verformung bzw. der Belastung kann mit Hilfe von Dehnmessstreifen durchgeführt werden, die beispielsweise in die Laminate der Rotorblattschale, in die Stege und/oder die Klebungen integriert sind. Die Dehnmessstreifen können in die genannten, aber auch andere Bauteile des Rotorblattes einlaminiert sein.

Die Belastung wird gemessen und die Messwerte einer Kontrollereinheit zugeführt. Die Messwerte werden ausgewertet, und es werden Regelwerte ermittelt, die einer Steuerung der mindestens einen Expansionsvorrichtung zugeführt werden, die die mindestens eine Expansionsvorrichtung derart einstellt, dass die gemessene Verformung verringert oder minimiert wird oder Höchstwerte nicht überschreitet.

In einer kostengünstig herstellbaren Ausführungsform der Erfindung wird die Regeleinrichtung vorzugsweise elektronisch ausgebildet.

In einer weiteren bevorzugten Ausführungsform des erfindungsgemäßen Verfahrens wird das Rotorblatt mit mindestens einer in den Innenraum des Rotorblattes eingebrachter und dort eingestellter Expansionsvorrichtung zum Maschinenhaus einer Windenergieanlage heraufgezogen. Dort wird das Rotorblatt montiert, und die mindestens eine Rotorblattklemme und die mindestens eine Expansionsvorrichtung werden danach paarweise gelöst. Die mindestens eine Rotorblattklemme und die mindestens eine Expansionsvorrichtung können anschließend zur Montage eines weiteren Rotorblattes an derselben oder einer anderen Windenergieanlage verwendet werden. Entsprechendes gilt auch für die Demontage des und der Rotorblätter.

Günstigerweise werden die mindestens eine Rotorblattklemme und die ihr jeweils zugordnete Expansionsvorrichtung beim Aufbau gleichzeitig festgeklemmt und expandiert bzw. beim Abbau gleichzeitig gelöst und zusammengezogen. Dadurch entstehen auch während des Festklemmens bzw. Lösens keine Belastungsspitzen am Rotorblatt.

Die Expansionsvorrichtung kann vorzugsweise wenigstens einen eigenen Fahrantrieb aufweisen, mit dessen Hilfe die Expansionsvorrichtung vorzugsweise zwischen zwei Stegen oder entlang eines Steges in Längsrichtung des Rotorblattes hin und her verfahrbar ist. Daneben kann die Expansionsvorrichtung mit einem Expansionsantrieb expandiert und zusammengefaltet werden. Fahrantrieb und Expansionsantrieb können auch zumindest teilweise zusammenfallen.

Es ist jedoch auch denkbar, in einer anderen Ausführungsform der Erfindung, die mindestens eine Expansionsvorrichtung an einem Seil zu sichern, so dass die mindestens Expansionsvorrichtung, nachdem das Rotorblatt montiert ist und die Expansionsvorrichtung wieder gelöst ist, aus der Rotorblattspitze manuell herausgezogen werden kann.

Zur Durchführung des Verfahrens und als Teil der Montageanordnung wird ein Rotorblatt für eine Windenergieanlage mit einer Rotorblattschale und einem durch die Rotorblattschale begrenztem Innenraum und mindestens einem Segment der Rotorblattschale, um das mindestens eine Rotorblattklemme von außen anbringbar ist und in das mindestens eine Expansionsvorrichtung verbringbar ist und wenigstens einem im mindestens einen Segment angeordneten, eine Belastung der Rotorblattschale während der Montage messenden Messsensor zur Verfügung gestellt.

Das Rotorblatt weist einen durch die Rotorblattschale begrenzten Innenraum auf sowie mindesten ein Segment, um das die mindestens eine Rotorblattklemme von außen anbringbar ist. Der Innenraum ist so dimensioniert, dass mindestens eine Expansionsvorrichtung im Innenraum vor- und rückverfahrbar ist.

Erfindungsgemäß sind Messsensoren am Rotorblatt angeordnet, vorzugsweise in das Rotorblatt integriert, die eine Belastung der Rotorblattschale während der Montage/Demontage messen. Die Messsensoren sind vorzugsweise in dem mindestens einen Segment angeordnet, um das die mindestens eine Rotorblattklemme von außen anordnenbar ist.

Die Messsensoren können Dehnmessstreifen aufweisen und als Dehnmessstreifen ausgebildet sein. Sie können jedoch auch als optische Sensoren ausgebildet sein, die derart ausgestaltet sind, dass bei Glasfasergitter aufweisenden Rotorblatthalbschalen und einem in die Fasern gerichteten Laser die Sensoren aus den Fasern austretendes Laserlicht messen und durch Abweichungen des Reflexionswinkels auf die Belastung des Glasfasergitters schließen können.

Die Messensoren sind vorzugsweise über datenleitende Verbindungen mit wenigstens einem, vorzugsweise ebenfalls in der Rotorblattschale, vorzugsweise am Rotorblattanschlusss integrierten Anschluss verbunden. Der wenigstens eine Anschluss ist für eine Kontrollereinheit bestimmt. Die Kontrollereinheit kann im Bereich der Blattwurzel in die Anschlüsse, die elektronisch mit den Sensoren in Verbindung stehen, gesteckt werden, wobei die Kontrollereinheit einen weiteren Anschluss als Ausgang für Regelwerte aufweist, die für die Expansionsvorrichtung bestimmt sind. Die Kontrollreinheit kann aber auch Bestandteil des Rotorblattes sein und an ihm ständig angeordnet bleiben.

Es ist jedoch auch denkbar, die Messsensoren mit Sendern zur Funkübertragung der Messwerte zu versehen. Die Kontrollereinheit weist komplementäre Empfänger auf. Bei dieser Ausführungsform der Erfindung kann auf in die Rotorblattschale laminierte oder integrierte Kabel verzichtet werden.

Die Kontrollereinheit ermittelt aus den durch die Messsensoren zur Verfügung gestellten Messwerten Belastungen des Rotorblattes, insbesondere der Rotorblatthalbschale und der Stege im Bereich der Rotorblattklemme und berechnet aus den Messwerten der mindestens einen Expansionsvorrichtung zuführbare Regelwerte, die die mindestens eine Expansionsvorrichtung einstellen.

Ihren zweiten Aspekt erfüllt die Erfindung durch eine Montageanordnung mit den Merkmalen des Anspruchs 13, die sich insbesondere zur Durchführung eines eingangs genannten Verfahrens eignet.

Die Montageanordnung weist insbesondere eines der oben beschriebenen Rotorblätter auf, eine Hebeeinrichtung mit mindestens einer Rotorblattklemme, mit der mindestens eine Klemmkraft von außen auf die Rotorblattschale in den Innenraum weisend ausübbar ist, sowie eine vorzugsweise über die Rotorblattwurzel in den Innenraum einführbare, bis in das mindestens eine Segment verbringbare mindestens eine Expansionsvorrichtung, die im Segment, um das die mindestens eine Rotorblattklemme gelegt wird, expandierbar ist, bis sie mindestens eine von innen eine nach außen wirkende Gegenkraft zur mindestens einen Klemmkraft auf die Rotorblattschale ausübt und damit eine eine Verformung der Rotorblattschale bewirkende Gesamtkraft verringert.

In ihrem vierten Aspekt wird die Aufgabe durch eine Expansionsvorrichtung mit den Merkmalen des Anspruchs 16 erfüllt.

Die Expansionsvorrichtung ist zur Durchführung eines der oben genannten Verfahren geeignet und kann Bestandteil einer beschriebenen Montageanordnung sein.

Die erfindungsgemäße Expansionsvorrichtung weist sich gegenüberliegende Druckpolster auf, mit denen eine Gegenkraft auf Innenwandungen einer Rotorblattschale ausübbar ist, insbesondere um die von außen auf die Rotorblattschale und innere Struktur wirkende Klemmkraft einer Rotorblattklemme wenigstens teilweise zu kompensieren. Sie umfasst einen Fahrantrieb, mit dem die Expansionsvorrichtung entlang eines Innenraumes des Rotorblattes verfahrbar ist, und einen Expansionsantrieb, mit dem die Druckpolster voneinander weg und zueinander hin verfahrbar sind. Die Druckpolster sind zur Auflage an Innenwandungen der Rotorblattschale, insbesondere der beiden sich gegenüberliegenden Hauptgurte bestimmt.

In einer einfach herstellbaren Ausführungsform weist die Expansionsvorrichtung ein Spreizgestänge auf, an dem die beiden Druckpolster angeordnet sind.

Die Erfindung wird anhand eines Ausführungsbeispiels in sechs Figuren beschrieben. Dabei zeigen:
- Fig. 1: eine Vorderansicht einer geöffneten Rotorblattklemme
- Fig. 2: ein Rotorblatt mit montierter Rotornabe und am Rotorblatt angebrachter Rotorblattklemme gem. Fig. 1
- Fig. 3: eine erfindungsgemäße Spreizvorrichtung in einer Seitenansicht,
- Fig. 4: die zusammengezogene Spreizvorrichtung gemäß Fig. 3, zwischen den Hauptstegen des Rotorblattes in einer seitlichen Ansicht, teilweise als Schnitt,
- Fig. 5: die gespreizte Spreizeinrichtung gem. Fig. 3 in einem Segment der um das Rotorblatt geklemmten Rotorblattklemme,
- Fig. 6: eine Schnittdarstellung der Anordnung in Fig. 5 entlang der Linie VI-VI.

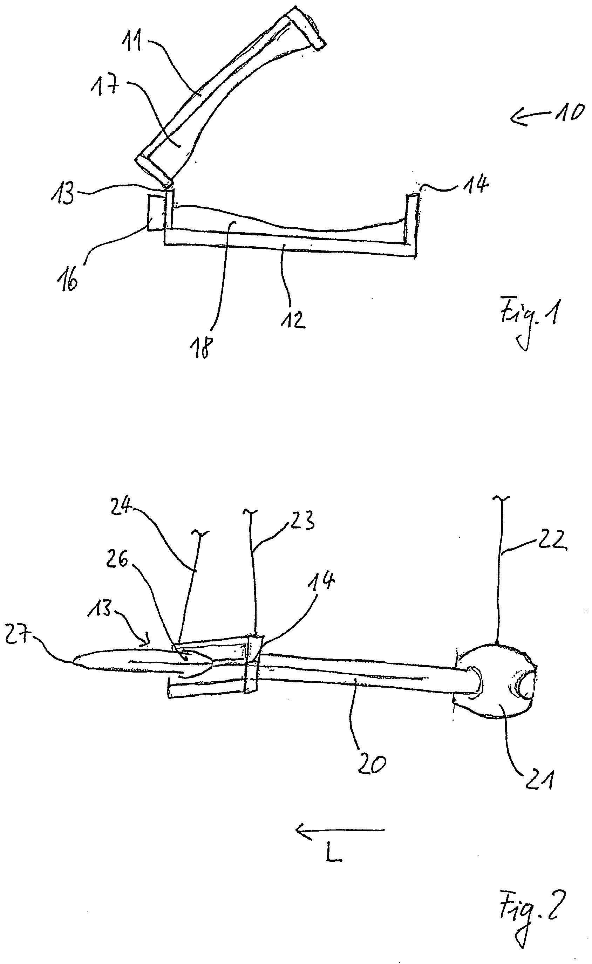

Fig. 1 zeigt eine Rotorblattklemme 10. Sie weist einen oberen verschwenkbaren bodenabseitigen Klemmarm 11 sowie einen unteren bodenseitigen Klemmarm 12 auf. Der obere Klemmarm 11 ist wahlweise an einem ersten 13 oder ihm gegenüberliegenden zweiten Gelenk 14 zum Öffnen und Verschließen der Rotorblattklemme 10 verschwenkbar an dem bodenseitigen Klemmarm 12 angeordnet. Die Rotorblattklemme 10 weist einen Verriegelungsmechanismus 16 auf, mit dem der bodenabseitige und der bodenseitige Klemmarm 11, 12 positionsfest zueinander verriegelbar sind.

Die Innenseiten des bodenabseitigen und des bodenseitigen Klemmarmes 11, 12 sind jeweils mit einer Beschädigung einer Außenfläche eines in der Rotorblattklemme 10 eingespannten Rotorblattes 20 entgegenwirkenden, bodenabseitigen bzw. bodenseitigen Prallschutzbacke 17, 18 versehen.

Fig. 2 zeigt ein montagebereites Rotorblatt 20 mit einer Rotornabe 21 und einer geschlossenen Rotorblattklemme 10 gem. Fig. 1.

Bei Montage eines Rotors an einer Windenergieanlage wird zunächst an die Rotornabe 21 ein erstes Rotorblatt 20 montiert. Das Rotorblatt 20 wird in horizontaler Lage direkt neben dem bereits aufgestellten Turm (nicht eingezeichnet) der Windenergieanlage mit auf dem Turm drehbar montiertem Maschinenhaus an die Rotornabe 21 angefügt.

Die Rotorblattklemme 10 ist gem. Fig. 1 mittels des ersten und zweiten Gelenkes 13, 14 zu beiden Seiten quer zu einer Längsrichtung L des eingeklemmten Rotorblattes 20 aufklappbar. Die geöffnete Rotorblattklemme 10 ist auf einer vertikal ausfahrbaren Abstützeinrichtung, dem Merlot®, angeordnet und wird in geöffnetem Zustand bodenseitig an das Rotorblatt 20 herangeführt, bis das Rotorblatt 20 mit seiner bodenseitigen Außenwandung auf der bodenseitigen Prallschutzbacke 18 des bodenseitigen Klemmarmes 12 der Rotorblattklemme 10 aufliegt. Dann wird die Rotorblattklemme 10 geschlossen, indem der bodenabseitige Klemmarm 11 über ein auf der Rotorblattklemme 10 aufliegendes Segment 26 des Rotorblattes 20 geschwenkt wird und verriegelt wird. Die Rotorblattklemme 10 wird so am Rotorblatt 20 durch Spannen des Verriegelungsmechanismus 16 festgeklemmt. Dabei muss eine so große Klemmkraft auf die Außenwandung des Rotorblattes 20 ausgeübt werden, dass ein Herausrutschen des Rotorblattes 20 aus der Rotorblattklemme 10 während des Montage- bzw. Demontageverfahrens erschwert, vorzugsweise verhindert wird.

Alternativ kann die bereits verschlossene Rotorblattklemme 10 über einen Tip 27 des Rotorblattes 20 gefädelt werden und dann in Längsrichtung L in geschlossenem Zustand über das Rotorblatt 20 verschoben werden, bis sie in das Segment 26 des Rotorblattes 20 verschoben ist, das für das Anbringen der Rotorblattklemme 10 vorgesehen ist.

Zum Anheben des Rotorblattes 20 sind drei Hebeseile 22, 23, 24 vorgesehen. Es ist in anderen Ausführungsformen der Erfindung natürlich auch denkbar, eine andere Anzahl von Hebeseilen 22, 23, 24 zu verwenden. Das erste Hebeseil 22 ist unmittelbar an der Rotornabe 21 befestigt. Das zweite und das dritte Hebeseil 23, 24 sind sich gegenüberliegend an der Rotorblattklemme 10 neben dem ersten und zweiten Gelenk 13, 14 befestigt.

Die Rotornabe 21 und das eine Rotorblatt 20 werden mittels eines (nicht dargestellten), einen Kranarm aufweisenden Kranes aus der horizontalen Lage neben dem Turm an den drei Hebeseilen 22, 23, 24 senkrecht vom Boden, vorzugsweise Erdboden angehoben und von dort zum Maschinenhaus hinauf angehoben. Während des Hebevorgangs verbleibt das Rotorblatt 20 gem. Fig. 2 fortwährend in einer im Wesentlichen horizontalen Lage.

Die Rotorblattklemme 10 übt beim Spannen eine von außen in einen zwischen den beiden Rotorblattschalen sich ausbildenden Innenraum 53 wirkende Klemmkraft aus. Die Klemmkraft kann zu einer Beschädigung der relativ leichten und empfindlichen, insbesondere inneren Struktur des Rotorblattes 20, insbesondere von Hauptstegen 51, 52 führen, die parallel zueinander im Innenraum 53 des Rotorblattes 20 in Längsrichtung L von einer Rotorblattwurzel 28 zum Tip 27 des Rotorblattes 20 verlaufen. Es kann aber auch oder zusätzlich zu anderen Beschädigungen, beispielsweise der Außenhaut, durch die Klemmkraft kommen. Die Beschädigungen können als Zwischenfaserbrüche im Laminat oder als Risse in den Klebungen der Hauptstege 51, 52 an einem bodenabseitigen Hauptgurt 54 und einem bodenseitigen Hauptgurt 55 der beiden Rotorblatthalbschalen des Rotorblattes 20 unentdeckt bleiben.

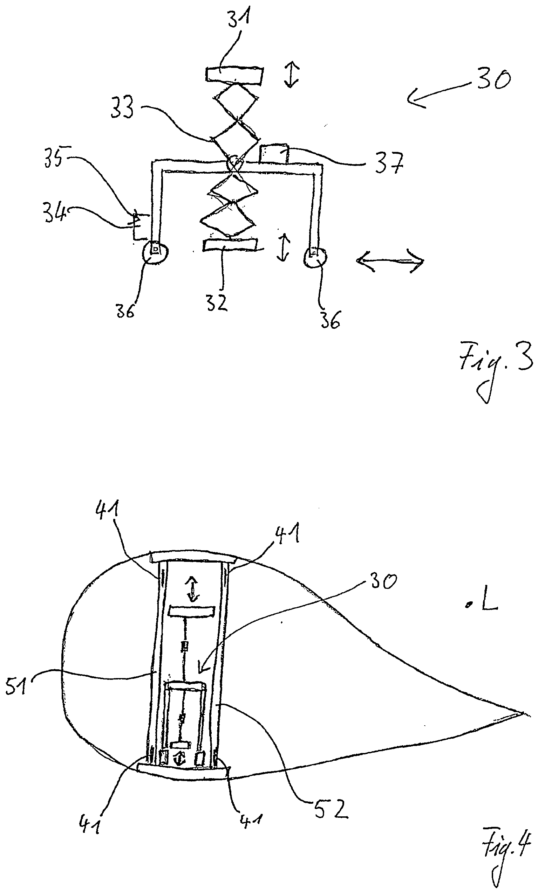

Zur Vermeidung von Beschädigungen der inneren Struktur des Rotorblattes 20 ist eine Spreizvorrichtung 30 gem. Fign. 3, 4, 5, 6 vorgesehen. Die in den Fign. 3, 4, 5, 6 dargestellte Spreizvorrichtung 30 ist nur exemplarisch. Es sind verschiedenste Ausführungsformen der Spreizvorrichtung denkbar.

Fig. 3 zeigt die Spreizvorrichtung 30 mit einem vier Räder 36 aufweisenden Gestell mit einem Fahrantrieb 34, mit dem die Spreizvorrichtung 30 zwischen den beiden Hauptstegen 51, 52 hindurch horizontal in Längsrichtung L des Rotorblattes 20 verfahren werden kann. Die Spreizvorrichtung 30 ist dafür in ihrer Breite senkrecht zur Fahrtrichtung so bemessen, dass sie zwischen den beiden Hauptstegen 51, 52 hindurchpasst. Sie kann in Längsrichtung L vor- und zurückverfahren werden. Der Fahrantrieb 34 ermöglicht es der Spreizvorrichtung 30, in einem zusammengefalteten Zustand in Längsrichtung L zwischen den beiden Hauptstegen 51, 52 von der Rotorblattwurzel 28 bis in den Tip 27 des Rotorblattes 20 zu fahren. Der Fahrantrieb 34 umfasst einen Elektromotor 35 mit durch ihn angetriebenen Rädern 36. Die Spreizvorrichtung 30 fährt auf der Innenwandung des bodenseitigen Hauptgurtes 55 des Rotorblattes 20 in Längsrichtung L hin und her.

Die Spreizvorrichtung 30 gem. Fig. 3 weist zwei sich gegenüberliegende Druckpolster 31, 32 auf. Die beiden Druckpolster 31, 32 sind mittels eines spreizbaren und wieder faltbaren Spreizgestänges 33 zueinander und voneinander weg verfahrbar Die Spreizvorrichtung 30 weist einen Spreizantrieb 37 zum Spreizen und Zusammenfalten des Spreizgestänges 33 auf. Der Spreizantrieb 37 kann ebenfalls über den Elektromotor 35 angetrieben werden.

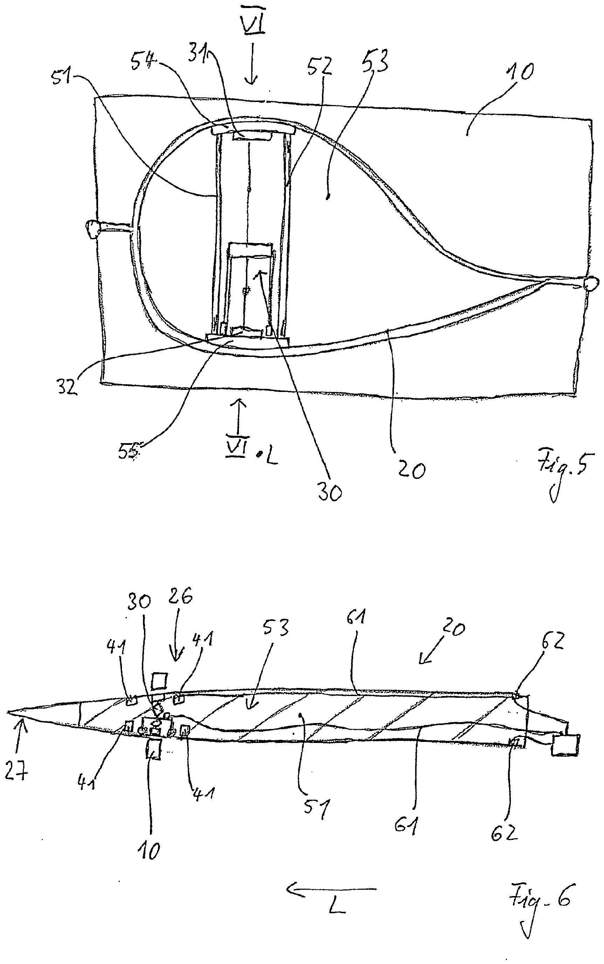

Die Spreizvorrichtung 30 wird in Fig. 2 über die montierte Rotornabe 21 und die zur Rotornabe 21 hin offene Rotorblattwurzel 28 in den Innenraum 53 des Rotorblattes 20 zwischen den beiden Hauptstegen 51, 52 eingeführt und dort bei horizontaler Lage des Rotorblattes 20 durch den Fahrantrieb 34 in das Segment 26 in Richtung des Tips 27 des Rotorblattes 20 gem. Fig. 4 verfahren, in dem außen um das Rotorblatt 20 die Rotorblattklemme 10 geklemmt ist. In dem Segment 26, in dem die Rotorblattklemme 10 von außen um das Rotorblatt 20 geklemmt ist, wird die Spreizvorrichtung 30 gemäß Fig. 5 mittels des Spreizantriebs 37 gespreizt, bis sie von innen mit den beiden Druckpolstern 31, 32 gegen die Innenwandungen der Hauptgurte 54, 55 drückt und somit der von außen wirkenden Klemmkraft der Rotorblattklemme 10 durch eine Gegenkraft entgegenwirkt.

Zur Steuerung der Gegenkraft und der richtig bemessenen Größe der Gegenkraft ist eine Kontrollereinheit 40 vorgesehen. Die Kontrollereinheit 40 ist während ihres Betriebs außerhalb des Rotorblattes 20 positioniert.

Fig. 6 zeigt die Verdrahtung der Kontrollereinheit 40 in einem Längsschnitt entlang des Rotorblattes 20. Die Kontrollereinheit 40 ist zum einen datenleitend mit dem Fahrantrieb 34 sowie dem Spreizantrieb 37 der Spreizvorrichtung 30 und zum anderen datenleitend mit im Rotorblatt 20 integrierten Sensoren, wie Dehnmessstreifen 41 o. Ä., verbunden.

Die Dehnmessstreifen 41 sind im Bereich der oder in den Klebungen der Hauptstege 51, 52 auf den beiden sich gegenüberliegenden Hauptgurten 54, 55 vorgesehen. Sie können auch in das Laminat der Hauptstege 51, 52 oder der Rotorblatthalbschalen integriert sein. Jeder der Dehnmessstreifen 41 ist durch jeweils eine elektrische Leitung 61 mit jeweils einem an der Rotorblattwurzel 28 angeordneten elektrischen Kontakt 62 verbunden. Die Dehnmessstreifen 41 bestimmen über Verformung der Hauptstege 51, 52 durch die von außen wirkende Klemmkraft der Rotorblattklemme 10 die auf die Hauptstege 51, 52 bzw. die Klebungen wirkenden Kräfte. Die Kontrollereinheit 40 berechnet aus den Messwerten der Dehnmessstreifen 41 die Gegenkraft der Spreizvorrichtung 30, mit der aus dem Innenraum 53 gegen die beiden sich gegenüberliegenden Innenwandungen der Hauptgurte 54, 55 gedrückt werden muss, so dass ihre aus Gegen- und Klemmkraft summierte resultierende Gesamtkraft möglichst gering wird und/oder die durch die Dehnmessstreifen 41 gemessenen Verformungen minimiert werden. Die Kontrollereinheit 40 ist als Regelkreis ausgebildet, so dass bei größer werdender gemessener Belastung der Hauptstege 51, 52 bzw. der Klebungen der Hauptstege 51, 52 auf den Hauptgurten 54, 55 die Gegenkraft solange erhöht wird, bis die an den Dehnmessstreifen 41 gemessenen Belastungen minimiert sind, dann ist die Spreizvorrichtung 30 eingestellt.

Nachdem die Einstellung der Spreizvorrichtung 30 beendet ist, wird das Rotorblatt 20 angehoben. Das Rotorblatt 20 wird mit Rotorblattklemme 10 und gespreizter Spreizvorrichtung 30 gemäß Fig. 5 aus der horizontalen Lage vom Boden vertikal angehoben bis auf Höhe des Maschinenhauses, und auf Höhe des Maschinenhauses wird die Rotorblattnabe 21 gemäß Fig. 2 um 90° gedreht und am Maschinenhaus montiert.

Nach der Montage der Rotorblattnabe 21 am Maschinenhaus werden gleichzeitig die Klemmkraft der Rotorblattklemme 10 sowie die Gegenkraft der Spreizvorrichtung 30 verringert, und die gelöste Rotorblattklemme 10 kann über den Tip 27 vom Rotorblatt 20 abgezogen werden. Die Blattklemme 10 kann auch vollständig geöffnet werden und so vom Rotorblatt 20 gelöst und wieder herabgelassen werden. Gleichzeitig, vorher oder nachher wird die gelöste Spreizvorrichtung 30 aus dem auf Höhe des Maschinenhauses im Wesentlichen horizontal angeordneten Rotorblatt 20 zwischen den Hauptstegen 51, 52 aus dem Segment 26 mittels des eigenen Spreizantriebs 34 herausgefahren.

Die Spreizvorrichtung 30 wird dann zur Montage eines zweiten Rotorblattes verwendet. Das Entsprechende gilt für die Rotorblattklemme 10. Zur Montage des zweiten Rotorblattes wird das erste Rotorblatt 20 mit Rotornabe 21 zuvor um 120° Grad gedreht, so dass der Rotorblattanschluss des zweiten Rotorblattes der bereits montierten Rotorblattnabe 21 in eine horizontale Position ausgerichtet wird. Das zweite Rotorblatt wird horizontal am Boden liegend mit der Rotorblattklemme 10 mittels des zweiten und des dritten Hebeseils 23, 24 und mittels des direkt an der Rotorblattwurzel des zweiten Rotorblattes befestigten ersten Hebeseils 22 mit eingeführter und eingestellter Spreizvorrichtung 30 horizontal ausgerichtet und vertikal angehoben. Es wird bis auf das Niveau des Rotorblattanschlusses am Maschinenhaus angehoben. Dann wird das zweite Rotorblatt an einem zweiten Anschluss der Rotornabe 21 montiert, und Rotorblattklemme 10 und Spreizvorrrichtung 30 werden wie beim ersten Rotorblatt 20 wiederum gelöst.

Der entsprechende Vorgang wiederholt sich dann für ein drittes Rotorblatt.

### Bezugszeichenliste

- 10: Rotorblattklemme
- 11: bodenabseitiger Klemmarm
- 12: bodenseitiger Klemmarm
- 13: erstes Gelenk
- 14: zweites Gelenk

- 16: Verriegelungsmechanismus
- 17: bodenabseitige Prallschutzbacke
- 18: bodenseitige Prallschutzbacke

- 20: Rotorblatt
- 21: Rotornabe
- 22: erstes Hebeseil
- 23: zweites Hebeseil
- 24: drittes Hebeseil

- 26: Segment
- 27: Tip
- 28: Rotorblattwurzel

- 30: Spreizvorrichtung
- 31: Druckpolster
- 32: Druckpolster
- 33: Spreizgestänge
- 34: Fahrantrieb
- 35: Elektromotor
- 36: Rad
- 37: Spreizantrieb
- 40: Kontrollereinheit
- 41: Dehnmessstreifen

- 51: Hauptsteg
- 52: Hauptsteg
- 53: Innenraum des Rotorblattes
- 54: bodenabseitiger Hauptgurt
- 55: bodenseitiger Hauptgurt

- 61: elektrische Leitung
- 62: elektrischer Kontakt

- L: Längsrichtung

## Patentansprüche

1. Verfahren zur Montage eines Rotorblattes (20) mit einer Rotorblattschale und einem durch die Rotorblattschale begrenzten Innenraum (53), indem
außen um die Rotorblattschale mindestens eine Rotorblattklemme (10) angebracht wird, mit der mindestens eine Klemmkraft von außen auf die Rotorblattschale, in den Innenraum (53) weisend, ausgeübt wird,
in den Innenraum (53) mindestens eine Expansionsvorrichtung (30) eingebracht wird, die Expansionsvorrichtung (30) im Innenraum (53) bis in mindestens ein Segment (26) des Rotorblattes (20) verbracht wird, um das die mindestens eine Rotorblattklemme (10) angebracht wird,
die mindestens eine Expansionsvorrichtung (30) in dem mindestens einen Segment (26) expandiert wird, bis von innen mindestens eine nach außen wirkende Gegenkraft auf die Rotorblattschale ausgeübt wird, die die mindestens eine Klemmkraft wenigstens teilweise kompensiert.

2. Verfahren nach Anspruch 1,
**dadurch gekennzeichnet, dass** eine Belastung in dem mindestens einen Segment (26) gemessen wird.

3. Verfahren nach Anspruch 2,
**dadurch gekennzeichnet, dass** eine Verformung in dem mindestens einen Segment (26) gemessen wird.

4. Verfahren nach einem der Ansprüche 1, 2 oder 3,
**dadurch gekennzeichnet, dass** die Messwerte einer Kontrollereinheit (40) zugeführt werden und dort ausgewertet werden und Regelwerte ermittelt und der mindestens einen Expansionsvorrichtung (30) zugeführt werden und die mindestens eine Expansionsvorrichtung (30) expandiert wird.

5. Verfahren nach wenigstens einem der vorstehenden Ansprüche,
**dadurch gekennzeichnet, dass** das Rotorblatt (20) mit der mindestens einen expandierten Expansionsvorrichtung (30) zum Maschinenhaus einer Windenergieanlage heraufgezogen wird, dort montiert wird und die mindestens eine Rotorblattklemme (10) und die mindestens eine Expansionsvorrichtung (30) danach gelöst werden.

6. Verfahren nach Anspruch 5,
**dadurch gekennzeichnet, dass** die mindestens eine Expansionsvorrichtung (30) an einem Seil gesichert wird, das Rotorblatt (20) nach der Montage mit einem ihm zugeordneten Tip (27) abgesenkt wird und die mindestens eine Expansionsvorrichtung (30) nach dem Lösen an dem Seil aus dem Innenraum (53) herausgezogen wird.

7. Montageanordnung für ein Rotorblatt (20) zur Durchführung eines Verfahrens nach einem der Ansprüche 1 bis 6 einer Windenergieanlage mit dem Rotorblatt (20) mit einer Rotorblattschale und einem durch die Rotorblattschale begrenzten Innenraum (53) und mindestens einem Segment (26) der Rotorblattschale, um das mindestens eine Rotorblattklemme (10) von außen anbringbar ist und in das mindestens eine Expansionsvorrichtung (30) verbringbar ist und wenigstens einem im mindestens einen Segment (26) angeordneten, eine Belastung der Rotorblattschale während der Montage messenden Messsensor (41), mit einer Hebeeinrichtung umfassend die mindestens eine Rotorblattklemme (10), mit der mindestens eine Klemmkraft von außen auf die Rotorblattschale in den Innenraum (53) weisend ausübbar ist, und mit der mindestens einen in den Innenraum (53) einführbaren, bis in das mindestens eine Segment (26) verbringbaren Expansionsvorrichtung (30), die innen in das mindestens eine Segment (26) expandierbar ist, bis sie mindestens eine von innen nach außen wirkende Gegenkraft zur Klemmkraft auf die Rotorblattschale ausübt und eine eine Belastung der Rotorblattschale bewirkende aus der mindestens einen Klemm- und der mindestens einen Gegenkraft erzeugte Gesamtkraft verringert ist.

8. Montageanordnung nach Anspruch 7,
**gekennzeichnet durch** eine Kontrollereinrichtung (40), die mit wenigstens einem in der Rotorblattschale integrierten, Belastungsmesswerte aufnehmenden Messsensor (41) verbunden ist und die mit der mindestens einen Expansionsvorrichtung (30) während der Montage verbunden ist und die die Belastungsmesswerte auswertet und Regelwerte ermittelt und der mindestens einen Expansionsvorrichtung (30) zuführt und **dadurch gekennzeichnet, dass** die mindestens eine Expansionsvorrichtung (30) derart regelbar ist, dass die Belastung minimiert ist.

9. Montageanordnung nach Anspruch 7 oder 8,
**gekennzeichnet durch** mindestens ein im Innenraum (53) verlaufendes Seil, das mit der mindestens einen Expansionsvorrichtung (30) verbunden ist und ein Herausziehen der mindestens einen Expansionseinrichtung aus dem Innenraum (53) gestattet.

10. Expansionsvorrichtung für eine Montageanordnung nach einem der Ansprüche 7 bis 9 mit
sich gegenüberliegenden Druckpolstern (31, 32), mit denen eine Gegenkraft auf Innenwandungen einer Rotorblattschale ausübbar ist, und
einem Fahrantrieb (34), mit dem die Vorrichtung entlang eines Innenraumes (53) eines Rotorblattes (20) verfahrbar ist, und einem Expansionsantrieb, mit dem die Druckpolster (31, 32) voneinander weg und zueinander hin verfahrbar sind.

11. Expansionsvorrichtung nach Anspruch 10,
**gekennzeichnet durch** ein Spreizgestänge (33), an dem die beiden Druckpolster (31, 32) angeordnet sind.

## Claims

1. A method for mounting a rotor blade (20) with a rotor blade shell and an internal space (53) defined by the rotor blade shell, by at least one rotor blade clamp (10) being applied around the outside of the rotor blade shell, by means of which at least one clamping force is exerted from the outside on the rotor blade shell, directed into the internal space (53), by at least one expansion device (30) being introduced into the internal space (53), by the expansion device (30) inside the internal space (53) being moved into at least one segment (26) of the rotor blade (20) around which the at least one rotor blade clamp (10) is applied, by the at least one expansion device (30) being expanded inside the at least one segment (26) until at least one outwardly-acting counteracting force is exerted from the inside on the rotor blade shell, which at least partially compensates the at least one clamping force.

2. The method as claimed in claim 1, **characterized in that** a load is measured inside the at least one segment (26).

3. The method as claimed in claim 2, **characterized in that** a deformation is measured inside the at least one segment (26).

4. The method as claimed in one of claims 1, 2 or 3, **characterized in that** the measurement values are supplied to a controller unit (40) and are evaluated there and control values are determined and supplied to the at least one expansion device (30), and the at least one expansion device (30) is expanded.

5. The method as claimed in at least one of the preceding claims, **characterized in that** the rotor blade (20), together with the at least one expanded expansion device (30), is pulled up to the nacelle of a wind turbine, and mounted there, and the at least one rotor blade clamp (10) and the at least one expansion device (30) are then released.

6. The method as claimed in claim 5, **characterized in that** the at least one expansion device (30) is secured to a rope, the rotor blade (20) is lowered after the mounting with a tip (27) which is allocated/assigned to it, and after release the at least one expansion device (30) is pulled out of the internal space (53) from the rope.

7. A mounting arrangement for a rotor blade (20) for carrying out a method as claimed in one of claims 1 to 6 of a wind turbine with a rotor blade (20) with a rotor blade shell and an internal space (53) defined by the rotor blade shell, and at least one segment (26) of the rotor blade shell, around which at least one rotor blade clamp (10) can be applied from the outside and into which at least one expansion device (30) can be moved, and at least one measurement sensor (41) arranged in the at least one segment (26) and measuring the load on the rotor blade shell during the mounting, with a hoisting device comprising the at least one rotor blade clamp (10) by means of which at least one clamping force can be exerted on the rotor blade shell from the outside, directed into the internal space (53), and with the at least one expansion device (30), which can be introduced into the internal space (53), can be moved into the at least one segment (26), and can be expanded inside the at least one segment (26) until it exerts on the rotor blade shell at least one counteracting force, which acts from the inside to the outside, counteracting the clamping force and a total force, which places a load on the rotor blade shell and is generated from the at least one clamping force and the at least one counteracting force, is reduced.

8. The mounting arrangement as claimed in claim 7, **characterized by** a controller device (40) which is connected to at least one measurement sensor (41) which is integrated into the rotor blade shell and receives load measurement values, and which is connected to the at least one expansion device (30) during the mounting and which evaluates the load measurement values and determines control values and supplies them to the at least one expansion device (30) and **characterized in that** the at least one expansion device (30) can be adjusted in such a way that the load is minimized.

9. The mounting arrangement as claimed in claim 7 or 8, **characterized by** at least one rope which extends inside the internal space (53) and is connected to the at least one expansion device (30) and allows the at least one expansion device to be pulled out of the internal space (53).

10. An expansion device for a mounting arrangement as claimed in one of claims 7 to 9, with opposite pressure pads (31, 32) by means of which a counteracting force can be exerted on internal walls of a rotor blade shell, and a motor drive (34) by means of which the device can be displaced along an internal space (53) of a rotor blade (20), and an expansion drive by means of which the pressure pads (31, 32) can be moved apart from and toward each other.

11. The expansion device as claimed in claim 10, **characterized by** a spreading rod (33) on which the two pressure pads (31, 32) are arranged.

## Revendications

1. Procédé pour le montage d'une pale de rotor (20) avec une coque de pale de rotor et un espace intérieur (53) délimité par la coque de pale de rotor,
au moins un serrage de pale de rotor (10) étant fixé à l'extérieur autour de la coque de pale de rotor avec lequel au moins une force de serrage est exercée de l'extérieur, tournée vers l'espace intérieur (53), sur la coque de pale de rotor, au moins un dispositif d'expansion (30) étant mis en place dans l'espace intérieur (53), le dispositif d'expansion (30) s'étendant dans l'espace intérieur (53) jusque dans au moins un segment (26) de la pale de rotor (20) autour duquel le serrage de pale de rotor qui existe au moins (10) est fixé,
le dispositif d'expansion qui existe au moins (30) étant expansé dans le segment qui existe au moins (26) jusqu'à ce qu'au moins une force antagoniste soit exercée de l'intérieur vers l'extérieur sur la coque de pale de rotor qui compense au moins partiellement la force de serrage qui existe au moins.

2. Procédé selon la revendication 1, **caractérisé en ce qu'**une charge est mesurée dans le segment qui existe au moins (26).

3. Procédé selon la revendication 2, **caractérisé en ce qu'**une déformation est mesurée dans le segment qui existe au moins (26).

4. Procédé selon l'une des revendications 1, 2 ou 3, **caractérisé en ce que** les valeurs de mesure sont fournies à une unité de contrôle (40) et y sont évaluées et des valeurs de réglage sont établies et fournies au dispositif d'expansion qui existe au moins (30) et le dispositif d'expansion qui existe au moins (30) est expansé.

5. Procédé selon au moins l'une des revendications précédentes, **caractérisé en ce que** la pale de rotor (20) est montée avec le dispositif d'expansion expansé qui existe au moins (30) à la salle des machines d'une éolienne, y est installée et le serrage de pale de rotor qui existe au moins (10) et le dispositif d'expansion qui existe au moins (30) sont ensuite desserrés.

6. Procédé selon la revendication 5, **caractérisé en ce que** le dispositif d'expansion qui existe au moins (30) est attaché à un câble, la pale de rotor (20) est abaissée après montage avec une pointe qui lui est associée (27) et après avoir été desserré le dispositif d'expansion qui existe au moins (30) est retiré de l'espace intérieur (53) du câble.

7. Dispositif de montage pour une pale de rotor (20) pour exécuter un procédé selon l'une des revendications 1 à 6 d'une éolienne avec la pale de rotor (20) avec une coque de pale de rotor et un espace intérieur (53) délimité par la coque de pale de rotor et au moins un segment (26) de la coque de pale de rotor autour duquel au moins un serrage de pale de rotor (10) peut être fixé de l'extérieur et dans lequel au moins un dispositif d'expansion (30) peut être placé, et au moins un capteur de mesure (41) placé dans le segment qui existe au moins (26), qui mesure une charge de la coque de pale de rotor pendant le montage, avec un dispositif de levage qui comprend le serrage de pale de rotor qui existe au moins (10) avec lequel au moins une force peut être exercée de l'extérieur sur la coque de pale de rotor en étant tournée dans l'espace intérieur (53) et avec le dispositif d'expansion qui existe au moins (30) qui peut être introduit dans l'espace intérieur (53), et peut être mis jusque dans le segment qui existe au moins (26), qui peut être expansé à l'intérieur dans le segment qui existe au moins (26) jusqu'à ce qu'il exerce au moins une force antagoniste de la force de serrage qui agit de l'intérieur vers l'extérieur sur la coque de pale de rotor et qu'une force d'ensemble, composée de la force de serrage qui existe au moins et de la force antagoniste qui existe au moins, qui provoque une charge de la coque de pale de rotor soit réduite.

8. Dispositif de montage selon la revendication 7, **caractérisé par** un dispositif de contrôle (40) qui est relié à au moins un capteur de mesure (41) prenant des valeurs mesurées de charge et est intégré dans la coque de pale de rotor, et qui est relié pendant le montage au dispositif d'expansion qui existe au moins (30), qui exploite les valeurs mesurées de charge et détermine les valeurs de réglage et qui les fournit au dispositif d'expansion qui existe au moins (30) et **caractérisé en ce que** le dispositif d'expansion qui existe au moins (30) peut être réglé de telle manière que la charge est minimisée.

9. Dispositif de montage selon la revendication 7 ou 8, **caractérisé par** au moins un câble qui s'étend dans l'espace intérieur (53) qui est relié au dispositif d'expansion qui existe au moins (30) et qui permet de retirer le dispositif d'expansion qui existe au moins (30) de l'espace intérieur (53).

10. Dispositif d'expansion pour un dispositif de montage selon l'une des revendications 7 à 9 avec
des coussinets de pression opposés (31, 32) avec lesquels une force antagoniste peut être exercée sur des parois intérieures d'une coque de pale de rotor et
un mécanisme d'entraînement (34) avec lequel le dispositif peut être déplacé le long d'un espace intérieur (53) d'une pale de rotor (20) et
un entraînement d'expansion avec lequel les coussinets de pression (31, 32) peuvent être déplacés en s'éloignant l'un de l'autre et en se rapprochant l'un de l'autre.

11. Dispositif d'expansion selon la revendication 10, **caractérisé par** des tringles d'écartement (33) sur lesquelles les deux coussinets de pression (31, 32) sont placés.
